(19) **Europäisches Patentamt** / **European Patent Office** / **Office européen des brevets**

(11) **EP 4 596 614 A1**

(12) **EUROPEAN PATENT APPLICATION**
published in accordance with Art. 153(4) EPC

(43) Date of publication:
06.08.2025 Bulletin 2025/32

(21) Application number: 23872113.8

(22) Date of filing: 21.09.2023

(51) International Patent Classification (IPC):
$C08J\ 9/18^{(2006.01)}$    $C08J\ 9/00^{(2006.01)}$

(52) Cooperative Patent Classification (CPC):
C08J 9/00; C08J 9/18

(86) International application number:
PCT/JP2023/034275

(87) International publication number:
WO 2024/070887 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022155999
29.03.2023 JP 2023053118

(71) Applicant: Sekisui Kasei Co., Ltd.
Kita-ku
Osaka-shi
Osaka 530-8565 (JP)

(72) Inventors:
• KAGEYAMA, Daichi
Osaka-shi, Osaka 530-8565 (JP)
• GONDOH, Yuichi
Osaka-shi, Osaka 530-8565 (JP)

(74) Representative: Hoffmann Eitle
Patent- und Rechtsanwälte PartmbB
Arabellastraße 30
81925 München (DE)

(54) **AMIDE ELASTOMER FOAM PARTICLES, AMIDE ELASTOMER FOAM MOLDED BODY, AND METHOD FOR PRODUCING SAID FOAM MOLDED BODY**

(57) The present invention aims to provide an amide-based elastomer foam molded body having at least one of the following properties: lightweight, high rebound resilience, and softness, and an amide-based elastomer foam particles for producing the foam molded body. The present invention relates to an amide-based elastomer foam particles comprising an amide-based elastomer resin as a base resin, wherein the amide-based elastomer resin content is 50 to 100 mass%, the amide-based elastomer resin has a Shore D hardness of 40 or less, and an absolute value of a local minimum value of the amide-based elastomer resin is 1.0E+05 or less, with a temperature at the local minimum value being 134°C or lower, wherein the local minimum value is determined based on a derivative obtained by first differentiating a complex viscosity value of the amide-based elastomer resin obtained by dynamic mechanical analysis under temperature distribution conditions.

EP 4 596 614 A1

## Description

Technical Field

The present invention relates to amide-based elastomer foam particles containing an amide-based elastomer resin as a base resin, an amide-based elastomer foam molded body having lightweight and high rebound resilience and containing an amide-based elastomer resin as a base resin, and a method for producing the foam molded body.

Background Art

Resin foam molded bodies are widely used as cushioning materials and packaging materials. Foam molded bodies are produced by heating and foaming (pre-foaming) foamable particles made of resin to obtain foam particles (pre-foam particles), and the resulting foam particles are introduced into a mold cavity for secondary foaming, whereby the foam particles are united by heat fusion.

Elastomers are positioned as engineering elastomers because of their excellent rebound resilience and high mechanical strength, and are considered for use in a variety of applications, including household goods, electrical appliance parts, sporting goods, automobile parts, and construction and civil engineering components. Since a molded body obtained by foaming such an elastomer is expected to be light and have high rebound resilience that the elastomer originally has, Patent Literature 1 and 2, for example, reported a method in which foam particles prepared from an elastomer resin are fused and foamed in a mold, thus molding a molded body.

Citation List

Patent Literature

PTL 1: JP2019-510840A
PTL 2: JP2019-518859A

Summary of Invention

Technical Problem

The foam molded bodies disclosed in Patent Literature 1 and 2 each have a density of about 0.2 g/cm$^3$, and so these are not considered to be light foam molded bodies, and there has been a demand for lighter elastomer foam molded bodies.

The foam molded body disclosed in Patent Literature 1 has a rebound resilience ratio of 66% at maximum. Thus, the foam molded body is considered to fail to exhibit the rebound resilience that the elastomer originally has, and there has been a demand for elastomer foam molded bodies having higher rebound resilience.

Hard foam molded bodies are difficult to use in applications that require cushioning properties. Thus, there has been a demand for softer foam molded bodies.

Solution to Problem

To solve the above problems, the present inventors conducted extensive study. As a result, they found that when foam particles containing, as a base resin, an amide-based elastomer that is soft and that exhibits specific properties in dynamic mechanical analysis is subjected to in-mold foaming, an amide-based elastomer foam molded body can be obtained that is not too hard and that is light and has a high rebound resilience ratio. The present invention is based on such findings, and representative present inventions are described below.

Item 1.

An amide-based elastomer foam particles comprising an amide-based elastomer resin as a base resin, wherein

the amide-based elastomer resin content is 50 to 100 mass%,
the amide-based elastomer resin has a Shore D hardness of 40 or less, and

an absolute value of a local minimum value of the amide-based elastomer resin is 1.0E+05 or less, with a temperature at the local minimum value being 134°C or lower, wherein the local minimum value is determined based on a derivative obtained by first differentiating a complex viscosity value of the amide-based elastomer resin obtained by dynamic mechanical analysis under temperature distribution conditions.

Item 2.

The foam particles according to Item 1, wherein the amide-based elastomer resin comprises a polyamide block as a hard segment and a polyether block as a soft segment.

Item 3.

The foam particles according to Item 1 or 2, wherein the amide-based elastomer resin has a Shore D hardness of 38 or less.

Item 4.

The foam particles according to any one of Items 1 to 3, wherein the absolute value of the local minimum value is 8.0E+04 or less.

Item 5.

The foam particles according to any one of Items 1 to 4, wherein the temperature at the local minimum value is 133°C or lower.

Item 6.

An amide-based elastomer foam molded body comprising an amide-based elastomer resin as a base resin, wherein

the amide-based elastomer resin content is 50 to 100 mass%,
the amide-based elastomer resin has a Shore D hardness of 40 or less, and
an absolute value of a local minimum value of the amide-based elastomer resin is 1.0E+05 or less, with a temperature at the local minimum value being 134°C or lower, wherein the local minimum value is determined based on a derivative obtained by first differentiating a complex viscosity value of the amide-based elastomer resin obtained by dynamic mechanical analysis under temperature distribution conditions.

Item 7.

The foam molded body according to Item 6, wherein the amide-based elastomer resin comprises a polyamide block as a hard segment and a polyether block as a soft segment.

Item 8.

The foam molded body according to Item 6 or 7, wherein the amide-based elastomer resin has a Shore D hardness of 38 or less.

Item 9.

The foam molded body according to any one of Items 6 to 8, wherein the absolute value of the local minimum value is 8.0E+04 or less.

Item 10.

The foam molded body according to any one of Items 6 to 9, wherein the temperature at the local minimum value is 133°C or lower.

Item 11.

The foam molded body according to any one of Items 6 to 10, wherein the foam molded body has a rebound resilience ratio of 70% or more.

Item 12.

The foam molded body according to any one of Items 6 to 11, wherein the foam molded body has a density of 0.20 g/cm$^3$ or less.

Item 13.

The foam molded body according to any one of Items 6 to 12, wherein the foam molded body has an Asker C hardness of 38 or less.

Item 14.

A method for producing a foam molded body, wherein the foam particles according to any one of Items 1 to 5 are introduced into a mold, heated, and foamed.

Advantageous Effects of Invention

The present invention can provide an amide-based elastomer foam molded body that is not too hard and that is light and has a high rebound resilience ratio, foam particles useful in producing the foam molded body, and a method for producing an amide-based elastomer foam molded body, using the foam particles.

Brief Description of Drawings

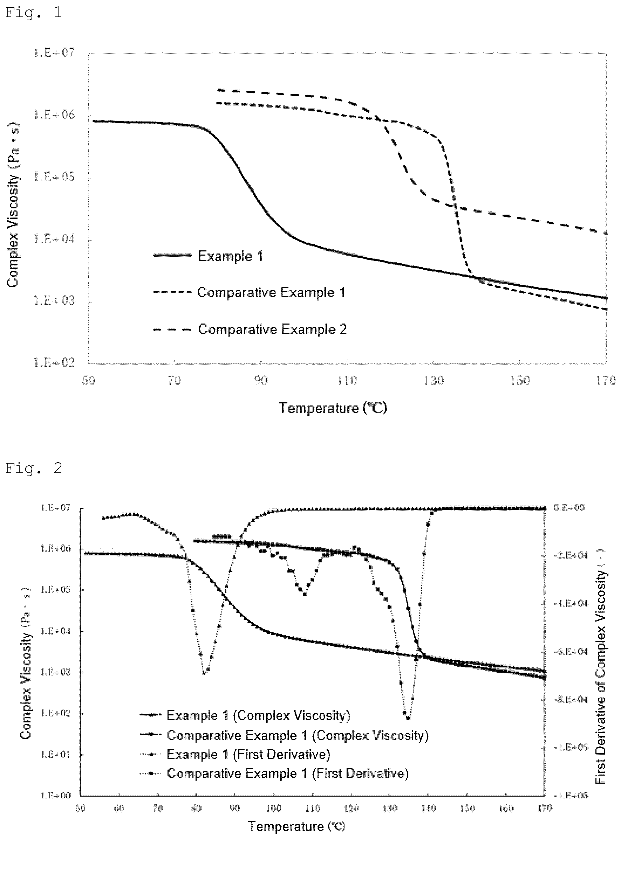

Fig. 1 shows results of dynamic mechanical analysis of a base resin under temperature distribution conditions. The horizontal axis shows the temperature (°C), and the vertical axis shows the complex viscosity (Pa·s).
Fig. 2 shows the complex viscosity values shown in Fig. 1, and values obtained by first differentiating the complex viscosity value. The horizontal axis shows the temperature (°C). The left vertical axis shows the complex viscosity (Pa·s), and the right vertical axis shows the values obtained by first differentiating.

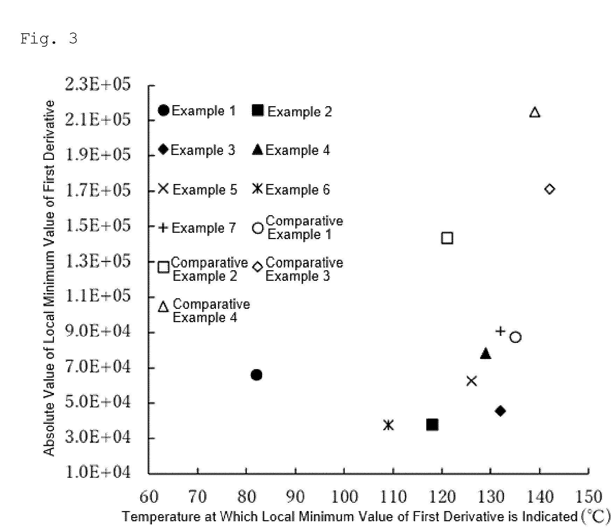

Fig. 3 shows a scatter chart based on the temperature at the local minimum value of the first derivative (horizontal axis (°C)) and the absolute value of the local minimum value obtained when the complex viscosity value was first differentiated (vertical axis), which were confirmed in the Examples and the Comparative Examples.

Description of Embodiments

(1) Amide-based elastomer foam particles

Amide-based elastomer foam particles (herein, sometimes simply referred to as "foam particles") contain an amide-based elastomer resin as a base resin. The foam particles may have an amide-based elastomer resin content of, for example, 50 to 100 mass% or 70 to 100 mass%, preferably 80 to 100 mass%, more preferably 90 to 100 mass%, based on the mass of the foam particles. A single amide-based elastomer resin may be used alone, or two or more may be used in combination.
Preferably, the amide-based elastomer resin is a copolymer resin including a polyamide block as a hard segment and a polyether block as a soft segment.
Examples of the polyamide block constituting the hard segment include polyamide structures derived from polycondensation polyamides, such as ε-caprolactam, 11-aminoundecanoic acid, and 12-aminolauric acid; and copolymerization polyamides of dicarboxylic acids, such as adipic acid, sebacic acid, terephthalic acid, and isophthalic acid with diamines, such as hexamethylenediamine, nonanediamine, and methylpentadiamine. The polyamide block may be a combination of units constituting these polyamide structures.
Examples of the polyether block constituting the soft segment include polyether structures derived from polyethylene glycol, polypropylene glycol, and polytetramethylene glycol. The polyether block may be a combination of units constituting these polyether structures.

The polyamide block and the polyether block may be randomly dispersed.

From the viewpoint of reducing environmental load and improving the rebound resilience ratio of the foam molded body, the block copolymer resin is preferably a castor oil-derived block copolymer resin, more preferably a plant-derived resin in which 11-aminoundecanoic acid obtained from castor oil is used to form a polyamide block (castor oil-derived polyamide 11). When 11-aminoundecanoic acid obtained from castor oil is used to form a polyamide block, a polytetramethylene glycol is preferably used to form a polyether block, from the viewpoint of improving the rebound resilience ratio of the foam molded body.

When the base resin is an amide-based elastomer resin having a specific viscoelastic behavior under temperature distribution conditions, a foam molded body having lightweight and high rebound resilience can be produced. For example, an amide-based elastomer resin that can be used is one in which an absolute value of a local minimum value is 1.0E+05 or less, with a temperature at the local minimum value being 134°C or lower, wherein the local minimum value is determined based on a derivative obtained by first differentiating a complex viscosity value obtained by dynamic mechanical analysis under temperature distribution conditions.

Local minimum value

The absolute value of the local minimum value may be, for example, 1.0E+05 or less (100,000 or less), preferably 9.0E+04 or less (90,000 or less), more preferably 8E+04 or less (80,000 or less), still more preferably 7.5E+04 or less (75,000 or less). The absolute value of the local minimum value may be, for example, 0.0E+00 or more, 1.0E+02 or more, etc. The absolute value of the local minimum value may be, for example, 0.0E+00 to 1.0E+05, 0.0E+00 to 9.0E+04, 0.0E+00 to 8.0E+04, 0.0E+00 to 7.5E+04, 1.0E+02 to 1.0E+05, 1.0E+02 to 9.0E+04, 1.0E+02 to 8.0E+04, 1.0E+02 to 7.5E+04, etc.

The temperature at the local minimum value may be, for example, 134°C or lower, preferably 133°C or lower, more preferably 132°C or lower, still more preferably 130°C or lower, most preferably 127°C or lower. The temperature at the local minimum value may be, for example, 65°C or higher, 70°C or higher, 75°C or higher, etc. The temperature at the local minimum value may be 65 to 134°C, 70 to 134°C, 75 to 134°C, 65 to 133°C, 70 to 133°C, 75 to 133°C, 65 to 132°C, 70 to 132°C, 75 to 132°C, 65 to 130°C, 70 to 130°C, 75 to 130°C, 65 to 127°C, 70 to 127°C, 75 to 127°C, etc.

When the base resin is an amide-based elastomer resin having an absolute value of the local minimum value in the above range with a temperature at the local minimum value in the above range, a foam molded body having lightweight and high rebound resilience can be produced as described above.

The local minimum value can be determined as follows. The amide-based elastomer resin is subjected to dynamic mechanical analysis under temperature distribution conditions to obtain a complex viscosity value. The complex viscosity value is first differentiated to obtain a first derivative. When a graph is drawn with the first derivative on the vertical axis and the temperature on the horizontal axis (e.g., Fig. 2), the minimum first derivative is the local minimum value. For example, in Example 1 shown in Fig. 2, the local minimum value is 68541, and the temperature at which the local minimum value is indicated is 82°C.

Measurement of complex viscosity

The complex viscosity can be measured in accordance with JIS K 7244-1. For example, it can be determined as follows. A resin to be used as a sample is pressed with a heat press machine into a disk-shaped sample having a diameter of 25 mm and a thickness of 3 mm. Next, plates of a dynamic viscoelasticity measuring device (e.g., PHYSICA MCR301 (produced by Anton Paar)) are heated to 220°C. The sample is placed between the heated plates and heated under nitrogen atmosphere for 5 minutes, and the sample is thus melted. The gap between the plates is set to 2.0 mm, and protruding resin is removed. The measurement starts 5 minutes after the measurement temperature reaches ±1°C. The complex viscosity is measured under the following measurement conditions: frequency: 1 Hz; distortion: 1%; normal force: ON; temperature: 220 to 50°C or 220 to 80°C (in either case, the temperature drop rate is 2°C/min).

Calculation of first derivative of complex viscosity

The complex viscosity value at each temperature obtained by measuring the complex viscosity is first differentiated to determine the local minimum value of the first derivative and its absolute value. Specifically, the difference in complex viscosity values at 5°C intervals is divided by 5°C for such determination. This process can be performed in Excel. The absolute value of the local minimum value and the temperature at which the local minimum value is indicated can be obtained from the first derivative of the complex viscosity as a function of temperature.

The biobased product content of the amide-based elastomer resin, as measured according to ASTM D6866, can be set to, for example, 30% or more, 40% or more, or 30 to 80%; preferably 40 to 80%; more preferably 40 to 70%. When the biobased product content is in the above range, a decrease in the rebound resilience ratio can be prevented or reduced while increasing the biobased product content of the foam molded body.

Shore D hardness of amide-based elastomer resin

Preferably, the hardness of the amide-based elastomer resin is lower so that a soft foam molded body can be produced. The Shore D hardness of the amide-based elastomer resin may be 40 or less, preferably 38 or less, more preferably 37 or less, still more preferably 35 or less. The Shore D hardness of the amide-based elastomer resin is, for example, 25 to 40, 25 to 38, 25 to 37, 25 to 35, 30 to 40, 30 to 38, 30 to 37, 30 to 35, etc. The Shore D hardness of the amide-based elastomer resin can be determined in accordance with ISO 868.

The melting point (ISO 11357) of the amide-based elastomer resin is preferably 70 to 160°C, more preferably 80 to 150°C.

The melt mass flow rate (MFR) of the amide-based elastomer resin may be, for example, 20 to 50 g/10 min, preferably 30 to 50 g/10 min, more preferably 35 to 45 g/10 min.

The base resin may include other resins, such as other amide-based resins, polyether resins, styrene-based elastomers, olefin-based elastomers, ester-based elastomers, and the like, in addition to the amide-based elastomer resin, to an extent that the effects of the present invention are not impaired.

The form particles may include a flame retardant, coloring agent, antistatic agent, spreading agent, plasticizer, cross-linking agent, filler, lubricant, and the like, in addition to the base resin.

Examples of the flame retardant include hexabromocyclododecane and triallyl isocyanurate 6 bromide.

Examples of the colorant include inorganic pigments, such as carbon black, graphite, iron oxide, and titanium oxide; organic pigments, such as phthalocyanine blue, quinacridone red, and isoindolinone yellow; special pigments, such as metallic powder and pearl; and dyes.

Examples of the antistatic agent include polyoxyethylene alkylphenol ether and stearic acid monoglyceride.

Examples of the spreading agent include polybutene, polyethylene glycol, silicon oil, and the like.

The foam particles preferably have a bulk density in the range of 0.015 to 0.5 g/cm$^3$. The bulk density is more preferably 0.02 to 0.3 g/cm$^3$, still more preferably 0.05 to 0.2 g/cm$^3$.

The shape of the foam particles is not limited, and examples include spherical, elliptically spherical (oval), columnar, prismatic, pellet-like, and granular-like shapes.

The average particle size of the foam particles is not limited as long as the desired foam molded body can be obtained. It is preferably 1 to 10 mm, more preferably 2 to 10 mm. When the average particle diameter is in the above range, the production of foam particles is easy, the secondary foaming properties during molding are not easily reduced, the property of being introduced into a mold when a foam molded body is produced by heat-foaming is not easily reduced, and a foam molded body having a complicated shape is easily produced.

The foam particles are useful as a raw material for the production of a foam molded body that is light and has a rebound resilience ratio.

The foam particles may be used as a raw material for a foam molded body to be foamed in a mold, or may be used as is as a filler in a cushion.

(2) Amide-based elastomer foam molded body

The polyamide-based elastomer foam molded body (herein, sometimes simply referred to as "foam molded body") has an amide-based elastomer resin content of 50 to 100 mass%, for example. The details of the amide-based elastomer resin in the polyamide-based elastomer foam molded body are the same as described above for the amide-based elastomer resin. Preferably, the amide-based elastomer resin has a Shore D hardness of 40 or less. Preferably, the amide-based elastomer resin is such that an absolute value of a local minimum value is 1.0E+05 or less, with a temperature at the local minimum value being 134°C or lower, wherein the local minimum value is determined based on a derivative obtained by first differentiating the complex viscosity value of the amide-based elastomer resin obtained by dynamic mechanical analysis under temperature distribution conditions.

Preferably, the foam molded body is composed of multiple fused bodies of foam particles that are formed by in-mold foam molding of the foam particles.

The foam molded body has an amide-based elastomer resin content of, for example, 50 to 100 mass% or 70 to 100 mass%, preferably 80 to 100 mass%, more preferably 90 to 100 mass%. When the amide-based elastomer resin content is in the above range, the foam molded body is light and has a high rebound resilience ratio. A single amide-based elastomer resin may be used alone or two or more may be used in combination.

The foam molded body may contain two or more amide-based elastomer resins mentioned above each having a different biobased product content, or may contain a resin having a biobased product content of 0%.

The foam molded body may contain other resins, such as other amide-based resins, polyether resins, styrene-based elastomers, olefin-based elastomers, ester-based elastomers, and the like, in addition to the amide-based elastomer resin, to an extent that the effects of the present invention are not impaired.

The foam molded body may also contain a flame retardant, coloring agent, antistatic agent, spreading agent, plasticizer, cross-linking agent, filler, lubricant, and the like, to an extent that the effects of the present invention are not impaired.

The foam molded body has a high rebound resilience ratio because it contains the amide-based elastomer resin or because it is produced from the foam particles. The rebound resilience ratio is, for example, 70% or more, 71% or more, 72% or more, or 73% or more, preferably 75% or more. The rebound resilience ratio may be, for example, 70 to 95%, 71 to 95%, 72 to 95%, 73 to 95%, 75 to 95%, etc.

The foam molded body is light for an elastomer foam molded body because it contains the amide-based elastomer resin or because it is produced from the foam particles. The density of the foam molded body is, for example, 0.20 $g/cm^3$ or less, preferably 0.18 $g/cm^3$ or less, more preferably 0.17 $g/cm^3$ or less. The density may be 0.05 to 0.20 $g/cm^3$, 0.08 to 0.18 $g/cm^3$, 0.10 to 0.17 $g/cm^3$, etc.

The foam molded body is soft for an elastomer foam molded body because it contains the amide-based elastomer resin or because it is produced from the foam particles. The foam molded body has an Asker C hardness of, for example, 42 or less, 41 or less, 39 or less, etc., preferably 38 or less, more preferably 37 or less, still more preferably 35 or less. The Asker C hardness may be 23 to 42, 23 to 41, 23 to 39, 23 to 38, 23 to 37, 23 to 35, 25 to 42, 25 to 41, 25 to 39, 25 to 38, 25 to 37, 25 to 35, 27 to 35, etc.

The foam molded body can be used in industrial fields, sporting goods, cushioning materials, bed core materials, seat cushions (cushions for sheets), and automotive parts (automobile interior parts and the like). In particular, the foam molded body can be used for applications in which environmental load reduction and rebound resilience improvement are desired. Examples include shoe midsole, insole, and outsole parts; core materials for hitting tools of sporting goods such as rackets and bats; protectors for sporting goods, such as pads and protectors; medical, nursing, welfare, or health care products, such as pads and protectors; tire core materials for bicycles, wheelchairs, and the like; interior materials, seat core materials, shock-absorbing materials, and vibration-absorbing materials for automobiles, railroad vehicles, airplanes, and other transportation equipment; fenders; floats; toys; flooring materials; wall materials; beds; cushions; and transport containers for electronic components, various industrial materials, food, and the like.

The foam molded body may be appropriately shaped according to the above applications.

(3) Method for producing polyamide-based elastomer foam particles

Foam particles to be introduced into a mold can be obtained through the step of impregnating the particles of the base resin with a foaming agent to obtain foamable particles (impregnation step), the step of foaming the foamable particles, and optionally, the step of applying internal pressure to introduce an inorganic gas into the foam particles.

Impregnation step

(a) Resin particles

The resin particles can be obtained by using a known production method and known equipment. For example, resin particles can be produced by granulating a molten mixture of base resin extruded from an extruder by underwater cutting, strand cutting, or the like. The temperature, time, pressure, and the like during melt kneading can be set as appropriate for raw materials to be used and production equipment.

The melt-kneading temperature in the extruder during melt kneading is a temperature at which the base resin is sufficiently softened. Therefore, it can be set appropriately according to the resin to be used. The melt-kneading temperature is preferably 140 to 190°C, more preferably 150 to 180°C. The "melt-kneading temperature" refers to the temperature of a melt-kneaded product inside the extruder, as obtained with a thermocouple thermometer by measuring the temperature at the center of a melt-kneaded product flow channel near an extruder head.

Examples of the shape of the resin particles include spherical, elliptically spherical (oval), columnar, prismatic, pellet, and granular shapes.

The resin particles preferably have an L/D of 0.8 to 3, wherein L is the length, and D is the average diameter. The resin particles with an L/D in this range have excellent filling properties in a mold. The "length L" of the resin particles refers to the length in the extrusion direction, and the "average diameter D" refers to the diameter of the cut surface of a resin particle substantially perpendicular to the direction of the length L.

The average diameter D of the resin particles is preferably 0.5 to 1.5 mm. When the average diameter D is 0.5 mm or more, the foaming agent tends to have better holding properties, and the foamable particles tend to have better foaming properties. When the average diameter D is 1.5 mm or less, the foam particles tend to have better filling properties in a mold, and the thickness of the foam molded body when produced in plate form can be easily increased.

(b) Foamable particles

Foamable particles are produced by impregnating resin particles with a foaming agent. As the technique of impregnating resin particles with a foaming agent, a known technique can be used. Examples include a method in which resin particles, a dispersant, and water are fed into an autoclave; and the mixture is stirred to disperse the resin particles in water, thus obtaining a dispersion, to which a foaming agent is added under pressure to thus impregnate the foaming agent into the resin particles.

Examples of dispersants include, but are not limited to, poorly water-soluble inorganic substances, such as calcium phosphate, magnesium pyrophosphate, sodium pyrophosphate, magnesium oxide, hydroxyapatite; and surfactants, such as sodium dodecylbenzene sulfonate.

The foaming agent may be a general-purpose foaming agent. Examples include air; inert gases, such as nitrogen and carbon dioxide (carbon dioxide gas); aliphatic hydrocarbons, such as propane, butane, and pentane; and halogenated hydrocarbons. Air, inert gases, or aliphatic hydrocarbons are preferred. The foaming agents may be used singly, or in a combination of two or more.

The amount of the foaming agent to be impregnated into the resin particles is preferably 1 to 15 parts by mass, based on 100 parts by mass of the resin particles. When the amount of the foaming agent is 1 part by mass or more, the foaming power is not reduced, and excellent foaming is possible even when the foaming ratio is high. When the amount of the foaming agent is 15 parts by mass or less, breakage of the cell membrane is prevented or reduced, and the plasticizing effect is prevented or reduced from overly increasing. Thus, the excessive reduction in the viscosity during foaming is prevented or reduced, and shrinkage is prevented or reduced. The amount of the foaming agent is more preferably 2 to 12 parts by mass. In this range, the foaming power can be sufficiently increased, and foaming can be further enhanced even when the foaming ratio is high.

The temperature of impregnating the resin particles with the foaming agent is preferably 10 to 120°C, and more preferably 20 to 110°C. When the impregnation temperature of the foaming agent is in this range, the time required for impregnating the resin particles with the foaming agent is not increased, and production efficiency is not easily reduced; or resin particles are not easily fused with each other, and the generation of bonded particles is prevented or reduced. A foaming auxiliary agent (plasticizer) can be used in a combination with the foaming agent. Examples of the foaming auxiliary agent (plasticizer) include diisobutyl adipate, toluene, cyclohexane, ethyl benzene, and the like.

Foaming step

(c) Foam particles

In the foaming step, the foaming temperature and a heating medium are not limited, as long as foam particles are obtained by foaming foamable particles.

Powdered metal soaps, such as zinc stearate, calcium carbonate, and aluminum hydroxide, may be applied to the surfaces of the resin particles before foaming. This application can reduce the bonding between the resin particles during the foaming step. Alternatively, a surface treatment agent, such as an antistatic agent or a spreading agent, may be applied. Examples of antistatic agents include polyoxyethylene alkylphenol ethers and glyceryl monostearate. Examples of spreading agents include polybutene, polyethylene glycol, and silicone oil.

(4) Method for producing polyamide-based elastomer foam molded body

The foam molded body can be obtained by introducing foam particles (preferably, the foam particles of the present invention) into a mold, followed by heating and foaming. The foam molded body can be obtained, for example, by introducing foam particles (preferably, the foam particles of the present invention) containing a base resin into a cavity including of a pair of molds in which a first mold provided with a steam inlet is combined with a second mold; and heating the molds and the foam particles with a heating medium to foam the foam particles, thereby filling gaps between the foam particles, and allowing the foam particles to be fused with each other and unified.

When introducing foam particles, the density of the foam molded body can be adjusted, for example, by adjusting the amount of foam particles by controlling the cracking rate between the first and second molds. The cracking rate is, for example, 3 to 85%, preferably 5 to 85%, more preferably 10 to 80%. When the cracking rate is in this range, the degree of beauty of appearance can be adjusted. The method for identifying the cracking rate is as follows.

Cracking rate

Using the in-mold volume a (cm$^3$) with a pair of molds being completely closed, and the in-mold volume b (cm$^3$) in which cracking is taken out, the cracking rate is obtained according to the following equation.

$$\text{Cracking rate (\%)} = ((b-a)/a) \times 100$$

In heat molding, preferably, the foam particles are impregnated with an inorganic gas to improve the foaming power of the foam particles (internal pressure application step). By improving the foaming power, the fusion between foam particles is improved during heat foaming, and the foam molded body has even better mechanical strength and long-term dimensional stability. An inorganic gas is, for example, an inert gas or air. Examples of the inert gas include carbon dioxide, nitrogen, helium, argon, and the like. Preferable examples of inorganic gas include air, nitrogen, and carbon dioxide.

Examples of the method for impregnating an inorganic gas into the foam particles include a method for impregnating an inorganic gas into the foam particles by placing the foam particles in an atmosphere of an inorganic gas at an atmospheric pressure or higher. It is preferable to leave the foam particles to stand for 1 minute to 24 hours in an inorganic gas atmosphere at 0.01 MPa to 2.0 MPa, more preferably 5 min to 24 hours, and particularly preferably 20 min to 18 hours. The foam particles may be impregnated with an inorganic gas before being introduced into a mold, or may be impregnated with an inorganic gas. by placing a mold in which the foam particles have been introduced in an atmosphere of an inorganic gas.

If the foam particles are impregnated with an inorganic gas, the foam particles may be heated and foamed in the mold without any treatment; or they may be heated and foamed before being introduced into the mold to obtain foam particles having a high foaming ratio, and then, such foam particles may be introduced into the mold, heated, and foamed. A foam molded body with a high foaming rate can be obtained with the use of such foam particles with a high foaming ratio.

Examples

Below, embodiments of the present invention are described in further detail with reference to the Examples and the like, but these embodiments are not intended to limit the present invention.

Measurement method

The features described in the Examples were identified by the following methods.

Biobased product content

The biobased product content was measured according to ASTM D6866.

Melting point of base resin

The melting point of the base resin was measured according to ISO 11357.

Shore D hardness of base resin

The Shore D hardness of the base resin was measured according to ISO 868 based on the instantaneous value.

Density of base resin

The density of the base resin was measured according to ISO 1183.

Melt mass flow rate (MFR) of base resin

A sample of a base resin (shape: pellets, size: 4.0 mm × 3.0 mm × 2.5 mm) was vacuum-dried at 100°C for 3 hours, then hermetically sealed and stored in a desiccator until just before measurement. The melt mass-flow rate was measured by "b) Method for measuring time during which piston travels predetermined distance" described in the B method for JIS K 7210:1999 "Plastics-Determination of the melt mass-flow rate (MFR) and the melt volume-flow rate (MVR) of thermoplastics." Specifically, a Melt Flow Index Tester 120-SAS (produced by Yasuda Seiki Seisakusho Ltd.) was used, and the measurement conditions were as follows: sample: 3 to 8 g, preheating: 300 seconds, load hold: 30 seconds, test temperature: 230°C, test load: 21.18 N, and piston travel distance (interval): 25 mm. The number of tests was 3, and their average was taken as the value of melt mass-flow rate (g/10 min).

Impregnation amount of gas in foamable particles (amount of foaming agent)

After impregnation with butane gas as a foaming agent, the resulting foamable particles were immediately weighed for mass W1 (g), and allowed to stand for 24 hours at a temperature of 23 ± 2°C and a humidity of 50 ± 5%. Thereafter, mass W2 (g) of the foamable particles was weighed, and the impregnation amount of gas was calculated according to the following equation.

Impregnation amount of gas in foamable particles (mass%) = ((W1 - W2)/W1) × 100

Bulk density of foam particles

Foam particles (W g) before internal pressure application were weighed as a measurement sample, and the measurement sample was allowed to freely fall in a measuring cylinder. Thereafter, the bottom of the measuring cylinder was tapped to obtain a constant apparent volume V (cm$^3$) of the sample, and the weight and volume were measured. The bulk density of the foam particles was then calculated according to the following equation.

Bulk density (g/cm$^3$) = Weight of measurement sample (W)/volume of measurement sample        (V)

Amount of inorganic gas (nitrogen gas) in foam particles

Foam particles that filled 70% of the volume of the hermetically sealed container were weighed and put into a hermetically sealed container. After the container was hermetically sealed, pressurization was performed using an inorganic gas with a gauge pressure of 0.01 MPa to 2 MPa for an arbitrary amount of time. After the pressurization, the inorganic gas was purged until the inside of the hermetically sealed container reached atmospheric pressure, and the foam particles were taken out and weighed. The amount of inorganic gas was calculated according to the following equation.

Amount of inorganic gas (mass%) = ((b - a)/b) × 100

a: Weight (g) of foam particles before pressurization with inorganic gas
b: Weight (g) of foam particles after pressurization with inorganic gas

Average particle size of foam particles

Using a Ro-Tap sieve shaker (produced by SIEVE FACTORY IIDA Co., Ltd.), about 50 g of foam particles were classified for 5 minutes with JIS standard sieves having sieve openings of 26.5 mm, 22.4 mm, 19.0 mm, 16.0 mm, 13.2 mm, 11.20 mm, 9.50 mm, 8.80 mm, 6.70 mm, 5.66 mm, 4.76 mm, 4.00 mm, 3.35 mm 2.80 mm, 2.36 mm, 2.00 mm, 1.70 mm, 1.40 mm, 1.18 mm, 1.00 mm, 0.85 mm, 0.71 mm, 0.60 mm, 0.50 mm, 0.425 mm, 0.355 mm, 0.300 mm, 0.250 mm, 0.212 mm, or 0.180 mm. The weight of the sample on the sieve net was measured, and based on the cumulative mass distribution curve obtained from the results, the particle size (median diameter) at which the cumulative mass was 50% was defined as an average particle size.

Density of foam molded body

Immediately after molding, the foam molded body was dried at a temperature of 40°C for 12 hours, and after drying, the foam molded body was allowed to stand at a temperature of 23 ± 2°C and humidity of 50 ± 5% for 72 hours. The mass a (g) of the foam molded body that had been allowed to stand was measured to two decimal places, and the apparent volume b (cm$^3$) was obtained by measuring the external dimensions to one hundredth of a millimeter with a Digimatic Caliper (produced by Mitutoyo Corporation). The density of the foam molded body was calculated according to the following equation.

Density of foam molded body (g/cm$^3$) = a/b

Rebound resilience ratio of foam molded body

Measurement was performed in accordance with JIS K 6400-3:2011. Two samples of 50 mm × 50 mm × 20 mm (thickness) cut from the same foam body, which had been allowed to stand for 72 hours or more at a temperature of 23 ± 2°C and a humidity of 50 ± 5%, were overlapped and set in a rebound resilience tester (FR-2, produced by Kobunshi Keiki Co., Ltd.). A steel ball ($\varphi$5/8 inch, 16.3 g) was allowed to freely fall toward the samples from the height of 500 mm (a), the highest rebound height ((b) mm) was read, and the rebound resilience ratio (%) was calculated according to the following equation. The measurement was conducted three times using the same samples, and the average was obtained as the rebound resilience ratio.

$$\text{Rebound resilience ratio (\%)} = ((b)/(a)) \times 100$$

Complex viscosity measurement

The complex viscosity was measured in accordance with JIS K 7244-1. Specifically, a resin to be used as a sample was pressed with a heat press machine into a disk-shaped sample having a diameter of 25 mm and a thickness of 3 mm. Next, plates of a dynamic viscoelasticity measuring device (PHYSICA MCR301 (produced by Anton Paar)) were heated to 220°C. The sample was placed between the heated plates and heated under nitrogen atmosphere for 5 minutes, and the sample was thus melted. The gap between the plates was set to 2.0 mm, and protruding resin was removed. The measurement started 5 minutes after the measurement temperature reached $\pm 1$°C. The measurement conditions were as follows: frequency: 1 Hz; distortion: 1%; normal force: ON; temperature: 220 to 50°C or 220 to 80°C (in either case, the temperature drop rate was 2°C/min).

Calculation of first derivative of complex viscosity

The complex viscosity value at each temperature obtained by measuring the complex viscosity was first differentiated to determine the local minimum value of the first derivative and its absolute value. Specifically, the difference in complex viscosity values at 5°C intervals was divided by 5°C to determine the first derivative. This process was performed in Excel. The absolute value of the local minimum value and the temperature at which the local minimum value was indicated were obtained from the first derivative of the complex viscosity as a function of temperature.

Asker C hardness of foam molded body

The Asker C hardness was measured on a 10-mm or thicker test piece having a smooth surface after the test piece was conditioned in an environment of a temperature of 23 $\pm$ 2°C and a humidity of 50 $\pm$ 5 % for 72 hours or more, using an Asker Rubber Plastic Hardness Tester C Type durometer produced by Kobunshi Keiki Co., Ltd. The pressurizing plane was closely attached so that the indenter was perpendicular to the smooth measurement surface of the test piece, and the scale was immediately read. The sample was measured at 5 points, except for the plane where the foam particles were fused with each other, and the average was obtained as the C hardness.

Amide-based elastomer resin

Details of Pebax produced by Arkema Co., Ltd., which was used as the base resin in the Examples and the Comparative Examples, are as follows.

- Pebax Rnew 35R53 SP01: biobased product content: 28 to 32%; melting point: 146°C; Shore D hardness: 32; density: 1.02 g/cm$^3$
- Pebax Rnew 40R53 SP01: biobased product content: 44 to 48%; melting point: 148°C; Shore D hardness: 38; density: 1.03 g/cm$^3$
- Pebax 4533 SA01: biobased product content: 0%; melting point: 148°C; Shore D hardness: 42; density: 1.01 g/cm$^3$
- Pebax 3533 SA01; biobased product content: 0%; melting point: 144°C; Shore D hardness: 25; density: 1.00 g/cm$^3$
- Pebax 4033 SA01; biobased product content: 0%; melting point: 160°C; Shore D hardness: 37; density: 1.00 g/cm$^3$
- Pebax Rnew 55R53 SP01: biobased product content: 62 to 66%; melting point: 167°C; Shore D hardness: 48; density: 1.03 g/cm$^3$
- Pebax 5533 SA01: biobased product content: 0%; melting point: 159°C; Shore D hardness: 50; density: 1.01 g/cm$^3$

Pebax Rnew 35R53 SP01, 40R53 SP01, and 55R53 SP01 are polyamide-based elastomers each containing a polyamide 11 block derived from castor oil as a hard segment, and a polyether block as a soft segment. Pebax 4533 SA01, 3533 SA01, 4033 SA01, and 5533 SA01 are polyamide-based elastomers each containing a polyamide 12 block derived from petroleum as a hard segment, and a polyether block as a soft segment.

Example 1

Preparation of foamable particles

1.0 kg (100 parts by mass) of particles of the amide-based elastomer resin shown in Table 1 were fed into a 5-L capacity autoclave, and the autoclave was hermetically sealed. Carbon dioxide as a foaming agent was added to the autoclave under pressure such that the inner pressure of the autoclave was 4.0 MPa, and the autoclave was allowed to stand at 20°C for 72 hours. Subsequently, the pressure in the autoclave was decreased, whereby foamable particles were obtained. The impregnation amount of gas of the foaming agent in the foamable particles was 8.5 mass%.

Preparation of foam particles

0.5 parts by mass of an anti-fusing agent (polyoxyethylene polyoxypropylene glycol: Epan 740, produced by DKS Co., Ltd.) was applied to 1.0 kg (100 parts by mass) of the resulting foamable particles. Thereafter, the particles were introduced into a 50-L capacity cylindrical pre-foaming machine equipped with a stirrer, and heated with steam at 0.015 MPa under stirring to foam (pre-foam) the particles, thus obtaining foam particles. The foam particles had a bulk density of 0.13 g/cm$^3$.

Production of foam molded body

The foam particles were placed in a hermetically sealed container (autoclave), nitrogen gas was added under pressure to the sealed container at 0.5 MPa, and the container was allowed to stand at room temperature for 18 hours to impregnate the foam particles with the nitrogen gas (internal pressure application).
The foam particles removed from the hermetically sealed container were immediately introduced into a molding cavity, having a size of 150 mm $\times$ 150 mm $\times$ thickness 20 mm, of a molding device with a pair of molds consisting of a concave mold and a convex mold. After the completion of introduction, the molds were clamped, and heat molding with steam was performed, thus obtaining a foam molded body.

Examples 2 to 7

Preparation of foamable particles

100 parts by weight of each of the amide-based elastomer resins at the respective mass ratios shown in Table 1 or 2 were separately fed into a single-screw extruder for melt-kneading at 160°C, followed by further melt kneading while raising the temperature to 220°C. After the base resin in the molten state was cooled, the resin was extruded from each nozzle of a multi-nozzle die (having four nozzles with a diameter of 1 mm) attached to the front end of the single-screw extruder, and cut in water at 20 to 50°C. The resulting resin particles were cylindrical, with an average particle length of 1.5 mm and an average diameter of 1.5 mm.
1.0 kg (100 parts by mass) of the resulting resin particles, 3.0 kg of distilled water, and an aqueous sodium dodecylbenzenesulfonate solution (25% aqueous solution) were fed into a 5-L capacity autoclave equipped with a stirring blade, and the autoclave was hermetically sealed. Under stirring, 18 parts by mass of butane (normal butane:isobutane = 7:3 (capacity ratio)) as a foaming agent was added under pressure. Next, the inside of the autoclave was heated to 70°C, followed by heating for 2 hours and then cooling to 25°C. After completion of the cooling, the pressure in the autoclave was decreased, and the surfactant was immediately washed with distilled water, followed by dehydration, whereby foamable particles were obtained.
The resulting foamable particles were used to produce foam particles and a foam molded body by the same methods as in Example 1.

Comparative Example 1

100 parts by mass of the amide-based elastomer resin shown in Table 3 was fed into a twin-screw extruder for melt-kneading at 160°C, followed by further melt-kneading while raising the temperature to 220°C. After the base resin in the molten state was cooled, the resin was extruded from each nozzle of a multi-nozzle die (having four nozzles with a diameter of 1 mm) attached to the front end of the twin-screw extruder, and cut in water at 20 to 50°C. The resulting resin particles were cylindrical, with an average length of 1.5 mm and an average diameter of 1.5 mm.
The resulting resin particles were used to produce foamable particles, foam particles, and a foam molded body by the methods as in Examples 2 to 7.

Comparative Example 2

Foamable particles, foam particles, and a foam molded body were obtained by the same procedures as in Example 1, except that the base resin was the amide-based elastomer resin at the mass ratio shown in Table 3.

Comparative Examples 3 and 4

Foamable particles, foam particles, and a foam molded body were obtained by the same procedures as in Examples 2 to 7, except that the base resins were the respective amide-based elastomer resins at the mass ratios shown in Table 3.

Fig. 1 shows the complex viscosity behavior of the base resins used in Example 1 and Comparative Examples 1 and 2. Fig. 1 shows that the temperature at which the complex viscosity starts to decrease is lower in the base resin having a low Shore D hardness used in Example 1 than in the base resins used in Comparative Examples 1 and 2. The base resins used in the Examples showed a gentle slope of decrease in complex viscosity.

To quantitatively evaluate the decrease in viscosity, the first derivative of the complex viscosity chart was calculated. Fig. 2 shows the relationship between the derivative and temperature. The local minimum values were smaller (absolute values of the local minimum values were larger) in the base resins used in the Comparative Examples in which the slope of decrease in complex viscosity was steep in Fig. 1.

To facilitate visual recognition of the relationship between the local minimum value and the temperature, a graph was drawn with the absolute value of the local minimum value on the vertical axis and the temperature at which the local minimum value is indicated on the horizontal axis (Fig. 3). The base resins used in the Examples each had a smaller absolute value of the local minimum value (i.e., the slope of decrease in complex viscosity shown in Fig. 1 was smaller) with a lower temperature at which the local minimum value was indicated, than the base resins used in the Comparative Examples. This confirms that the amide-based elastomer resin in which the Shore D hardness is 40 or less and the absolute value of the local minimum value is 1.0E+05 or less, with a temperature at which the local minimum value is indicated being 134°C or lower, can impart lightweight properties, softness, and high resilience to the foam molded bodies.

Tables 1 to 3 show the properties of the base resins, foam particles, and foam molded bodies.

Table 1

| | | Unit | Example 1 | Example 2 | Example 3 | Example 4 |
|---|---|---|---|---|---|---|
| Base resin | Name of resin used (mass ratio) | - | Rnew 35R53 SP01 (100) | Rnew 35R53 SP01 (50) | Rnew 35R53 SP01 (30) | Rnew 40R53 SP01 (70) |
| | | - | | Rnew 40R53 SP01 (50) | Rnew 40R53 SP01 (70) | 4533 SA01 (30) |
| | Hardness (Shore D) | - | 32 | 33 | 35 | 37 |
| | Absolute value of local minimum value of first derivative | - | 68541 | 38000 | 45783 | 78667 |
| | Temperature at which local minimum value of first derivative is indicated | [°C] | 82 | 118 | 132 | 129 |
| Foam particles | Bulk density | [g/cm$^3$] | 0.13 | 0.14 | 0.11 | 0.11 |
| | Average particle size | [mm] | 9.0 | 2.0 | 2.4 | 2.6 |
| Molded body | Density | [g/cm$^3$] | 0.15 | 0.14 | 0.11 | 0.11 |
| | Hardness (Asker C) | - | 30 | 34 | 33 | 38 |
| | Rebound resilience ratio | [%] | 75 | 73 | 72 | 70 |

Table 2

| | | Unit | Example 5 | Example 6 | Example 7 |
|---|---|---|---|---|---|
| Base resin | Name of resin used (mass ratio) | - | Rnew 40R53 SP01 (60) | Rnew 35R53 SP01 (70) | Rnew 40R53 SP01 (85) |
| | | - | 4533 SA01 (40) | 4533 SA01 (30) | 3533 SA01 (15) |
| | Hardness (Shore D) | - | 38 | 32 | 38 |
| | Absolute value of local minimum value of first derivative | - | 63033 | 37867 | 90920 |
| | Temperature at which local minimum value of first derivative is indicated | [°C] | 126 | 109 | 132 |
| Foam particles | Bulk density | [g/cm$^3$] | 0.10 | 0.15 | 0.12 |
| | Average particle size | [mm] | 2.6 | 2.3 | 2.5 |
| Molded body | Density | [g/cm$^3$] | 0.10 | 0.16 | 0.13 |
| | Hardness (Asker C) | - | 36 | 28 | 41 |
| | Rebound resilience ratio | [%] | 71 | 75 | 70 |

Table 3

| | | Unit | Comparative Example 1 | Comparative Example 2 | Comparative Example 3 | Comparative Example 4 |
|---|---|---|---|---|---|---|
| Base resin | Name of resin used (mass ratio) | - | Rnew 40R53 SP01 (100) | 4033 SA01 (100) | Rnew 55R53 SP01 (100) | 5533 SA01 (100) |
| | | - | | | | |
| | Hardness (Shore D) | - | 38 | 37 | 48 | 50 |
| | Absolute value of local minimum value of first derivative | - | 87720 | 143600 | 171333 | 214917 |
| | Temperature at which local minimum value of first derivative is indicated | [°C] | 135 | 121 | 142 | 139 |
| Foam particles | Bulk density | [g/cm$^3$] | 0.10 | 0.11 | 0.10 | 0.12 |
| | Average particle size | [mm] | 5.0 | 10.0 | 3.2 | 3.2 |
| Molded body | Density | [g/cm$^3$] | 0.13 | 0.14 | 0.10 | 0.13 |
| | Hardness (Asker C) | - | 45 | 46 | 50 | 62 |
| | Rebound resilience ratio | [%] | 67 | 63 | 44 | 54 |

## Claims

1. Amide-based elastomer foam particles comprising an amide-based elastomer resin as a base resin,

   wherein the amide-based elastomer resin content is 50 to 100 mass%,
   the amide-based elastomer resin has a Shore D hardness of 40 or less, and
   an absolute value of a local minimum value of the amide-based elastomer resin is 1.0E+05 or less, with a temperature at the local minimum value being 134°C or lower, wherein the local minimum value is determined based on a derivative obtained by first differentiating a complex viscosity value of the amide-based elastomer resin obtained by dynamic mechanical analysis under temperature distribution conditions.

2. The foam particles according to claim 1, wherein the amide-based elastomer resin comprises a polyamide block as a hard segment and a polyether block as a soft segment.

3. The foam particles according to claim 1 or 2, wherein the amide-based elastomer resin has a Shore D hardness of 38 or less.

4. The foam particles according to any one of claims 1 to 3, wherein the absolute value of the local minimum value is 8.0E+04 or less.

5. The foam particles according to any one of claims 1 to 4, wherein the temperature at the local minimum value is 133°C or lower.

6. An amide-based elastomer foam molded body comprising an amide-based elastomer resin as a base resin,

   wherein the amide-based elastomer resin content is 50 to 100 mass%,
   the amide-based elastomer resin has a Shore D hardness of 40 or less, and
   an absolute value of a local minimum value of the amide-based elastomer resin is 1.0E+05 or less, with a temperature at the local minimum value being 134°C or lower, wherein the local minimum value is determined based on a derivative obtained by first differentiating a complex viscosity value of the amide-based elastomer resin obtained by dynamic mechanical analysis under temperature distribution conditions.

7. The foam molded body according to claim 6, wherein the amide-based elastomer resin comprises a polyamide block as a hard segment and a polyether block as a soft segment.

8. The foam molded body according to claim 6 or 7, wherein the amide-based elastomer resin has a Shore D hardness of 38 or less.

9. The foam molded body according to any one of claims 6 to 8, wherein the absolute value of the local minimum value is 8.0E+04 or less.

10. The foam molded body according to any one of claims 6 to 9, wherein the temperature at the local minimum value is 133°C or lower.

11. The foam molded body according to any one of claims 6 to 10, wherein the foam molded body has a rebound resilience ratio of 70% or more.

12. The foam molded body according to any one of claims 6 to 11, wherein the foam molded body has a density of 0.20 g/cm$^3$ or less.

13. The foam molded body according to any one of claims 6 to 12, wherein the foam molded body has an Asker C hardness of 38 or less.

14. A method for producing a foam molded body, wherein the foam particles according to any one of claims 1 to 5 are introduced into a mold, heated, and foamed.

Fig. 1

Fig. 2

Fig. 3

# INTERNATIONAL SEARCH REPORT

| International application No. |
| --- |
| **PCT/JP2023/034275** |

**A.    CLASSIFICATION OF SUBJECT MATTER**

***C08J 9/18***(2006.01)i; ***C08J 9/00***(2006.01)i
FI:    C08J9/18 CFG; C08J9/00

According to International Patent Classification (IPC) or to both national classification and IPC

**B.    FIELDS SEARCHED**

Minimum documentation searched (classification system followed by classification symbols)

C08J9/00-9/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WANG, Guilong. Lightweight, super-elastic, and thermal-sound insulation bio-based PEBA foams fabricated by high-pressure foam injection molding with mold-opening. European Polymer Journal, 2018, 103, 68-79<br>p. 69, right column to p. 70, right column, p. 72, right column, p. 74 | 6-13 |
| A | WO 2016/052387 A1 (SEKISUI PLASTICS CO., LTD.) 07 April 2016 (2016-04-07)<br>claims, examples | 1-14 |
| A | JP 2013-185074 A (SEKISUI PLASTICS CO., LTD.) 19 September 2013 (2013-09-19)<br>claims, examples, example 5 | 1-14 |
| A | WO 2017/094131 A1 (ASICS CORP.) 08 June 2017 (2017-06-08)<br>claims, examples | 1-14 |
| A | JP 2019-518859 A (BASF SE) 04 July 2019 (2019-07-04)<br>claims, examples | 1-14 |
| A | JP 2021-070713 A (SEKISUI PLASTICS CO., LTD.) 06 May 2021 (2021-05-06)<br>claims, examples | 1–14 |

☑ Further documents are listed in the continuation of Box C.     ☑ See patent family annex.

| | | |
| --- | --- | --- |
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
| --- | --- |
| **05 December 2023** | **19 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/034275**

| C. | DOCUMENTS CONSIDERED TO BE RELEVANT | |
|---|---|---|
| Category* | Citation of document, with indication, where appropriate, of the relevant passages | Relevant to claim No. |
| A | CN 114316345 A (CHEMICAL RESEARCH INSTITUTE OF CHINESE ACADEMY OF SCIENCES) 12 April 2022 (2022-04-12) claims, paragraph [0006] | 1-14 |

Form PCT/ISA/210 (second sheet) (January 2015)

## INTERNATIONAL SEARCH REPORT
### Information on patent family members

International application No.

**PCT/JP2023/034275**

| Patent document cited in search report | | | Publication date (day/month/year) | Patent family member(s) | | | Publication date (day/month/year) |
|---|---|---|---|---|---|---|---|
| WO | 2016/052387 | A1 | 07 April 2016 | US 2017/0283555 A1 claims, examples | | | |
| JP | 2013-185074 | A | 19 September 2013 | (Family: none) | | | |
| WO | 2017/094131 | A1 | 08 June 2017 | US 2018/0368515 A1 claims, examples | | | |
| JP | 2019-518859 | A | 04 July 2019 | US 2019/0203009 A1 claims, examples | | | |
| JP | 2021-070713 | A | 06 May 2021 | (Family: none) | | | |
| CN | 114316345 | A | 12 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019510840 A

- JP 2019518859 A